# EUROPEAN PATENT APPLICATION

(11) **EP 1 830 100 A1**
(43) Date of publication of application: **05.09.2007**
(21) Application number: 04793252.0
(22) Date of filing: 29.10.2004
(51) Int. Cl.: F16F 13/00

(54) **ANTIVIBRATION SUPPORTING APPARATUS**

(71) Applicant: FUKOKU Co., Ltd., Saitama-shi, Saitama 330-6024 (JP)
(72) Inventor: TANAKA, Tatsuo, c/o Fukoku Co., Ltd., Saitama 330-6024 (JP); KUZUKAWA, Mitsuo, c/o Fukoku Co., Ltd., Saitama 330-6024 (JP)
(74) Representative: Vogel, Andreas
(86) International application number: PCT/JP2004/016151
(87) International publication number: WO 2006/046306

(57) **Abstract**

A vibration-isolating mount device (30) has a case (31) fixed to a turntable (13) and a stud (33) fixed to a cab (20). An elastic body (34) is provided between the case (31) and the stud (33), and a relative radial-directional displacement of the stud (33) to the case (31) is suppressed by the elastic body (34). Further, a damping mechanism (40) having damping liquid (43) contained in a liquid chamber (42) and a damping member (41) fixed to the stud (33) is provided under the case (31). Furthermore, an air spring of which both ends are supported by the stud (33) or case (31) is provided above the case (31), and an axial-directional load transmitted from the cab (20) to the stud (33) is supported by the air spring (50).

## Description

### TECHNICAL FIELD

The present invention relates to a vibration-isolating support device, which supports a load between members and prevents vibration between the members from be transmitted.

### BACKGROUND ART

Construction machines as working vehicles used for a civil engineering and construction industry include a hydraulic shovel, hydraulic crane, bulldozer, wheel loader, power shovel, shovel loader, dump truck, or the like. Such construction machines have a vehicle body provided with a lower running body, an operating chamber (cab) also called a cab box loaded onto the vehicle body, and a working attachment mounted on the vehicle body, wherein a type of lower running body includes a crawler type using crawler belts, a truck type using truck carriers, and a wheel type using wheels. For example, in the hydraulic shovel, the vehicle body is composed of the lower running body and a turntable rotatably provided to the above, wherein a front attachment is mounted on the turntable and a cab, an engine, a power distributing mechanism and the like are incorporated into the turntable. The front attachment is formed of a boom vertically swingably mounted on an upper turning body and an arm swingably provided to a tip of the boom, wherein a bucket is mounted on a tip of the arm.

In various construction machines including such a hydraulic shovel, the operating chamber, i.e., the cab is loaded on the vehicle body via a vibration-isolating support device having an vibration-isolating function (vibration-isolating property) so that vibration at working and running is not transmitted from the vehicle body to the cab. As such a vibration-isolating support device, as shown in, for example, Patent Document 1, there is known a so-called liquid sealed-in type mount comprising a body case fixed to the vehicle body, an elastic body such as rubber fixed inside the body case, and a stud fixed to the cab and passing through the elastic body, wherein a damping plate fixed to the stud is dipped into damping liquid such as silicon oil sealed in the body case. In this case, the elastic body has an elastic supporting function to support a load of the cab and delay vibration transmission speed (easing of impact vibration transmission) from the vehicle body to the cab, and the damping plate has a damping function to generate shear resistance when moving in damping liquid and absorbs and dissipates the vibration itself transmitted from the vehicle body to the cab.

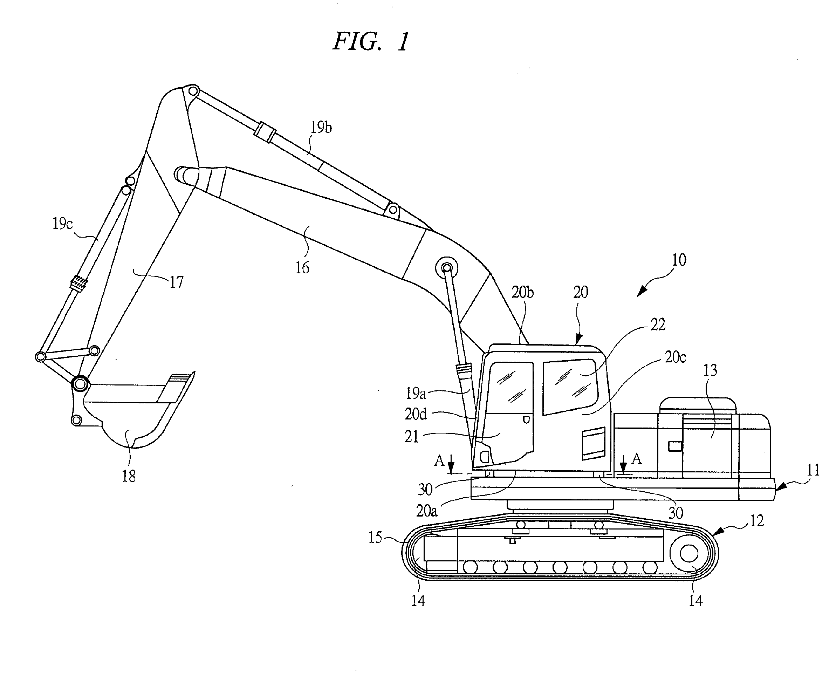

However, in such a mount, since the load of the cab is supported by the elastic body, a hard material durable to the load of the cab is used for the elastic body. For this reason, it is not possible to sufficiently increase vibration absorption by the elastic body, and it is difficult to improve a comfort ride. Accordingly, a vibration-isolating support device as shown in, for example, Patent Document 2 is constituted as follows: the stud is mounted axially movably on the elastic body and a spring is provided between the body case and the stud, wherein the load of the cab is supported by the spring; and the elastic body absorbs the radial-directional vibration of the stud and suppresses radial-directional displacement of the stud by elasticity thereof. Thereby, it is possible to make the spring sufficiently soft to support the load of the cab and improve the comfort ride.
Patent Documnet 1: Japanese Patent Laid-Open Publication No. 8-189544 (pages 2-3 and FIG. 1)
Patent Document 2: Japanese Patent Laid-Open Publication No. 2002-357238 (pages 2-3 and FIG. 2)

### DISCLOSURE OF THE INVENTION

However, if a spring constant of the spring is set small for improving the comfort ride, a displacement amount of the stud per unit of the load increases and consequently as weight of the cab changes, variation of attaching height thereof becomes large. Further, the mount is normally arranged at four corners of the cab, so that if a position of a gravity center of the cab is displaced from a center, loads applied to the respective mounts become different. Therefore, sink amounts of respective mounts become uneven, and it is difficult to keep the cab horizontal. Furthermore, various optional parts such as cab guards may be equipped with the cab previously or subsequently according to specifications thereof, and the weight and the position of the gravity center thereof may be changed according to the specifications. For this reason, in order to attach the cab with specified flatness at specified height, it is necessary to prepare the mounts in which the springs based on the weight, the position of the gravity center, or the like of the cab are employed. Thus, in order to use the vibration-isolating support device based on a limited production of various kinds of products, the number of parts thereof increases and control of the parts becomes complicated, which results in rising of costs of the vibration-isolating support device.

An object of the present invention is to enhance general versatility of the vibration-isolating support device and reduce the cost thereof.

An vibration-isolating support device according to the present invention has a cylindrical case whose one end is blocked, a stud arranged in the case, damping liquid contained in the case, and a damping member fixed to the stud and dipped in the damping liquid, the device comprising: an elastic body mounted on the case, supporting the stud axially movably, and suppressing a relative lateral-directional displacement of the stud to the case; and an air spring whose one end is supported to the stud directly or via another member and whose other end is supported to the case.

The vibration-isolating support device according to the present invention is such that one end of the air spring is supported to the stud via a blocking member fixed to the stud and blocking an air chamber of the air spring.

The vibration-isolating support device according to the present invention is such that one end of the air spring is fixed by caulking to the blocking member.

The vibration-isolating support device according to the present invention is such that stopper portions, each abutting on a portion of the air spring or the blocking member or abutting on the damping member to regulate a relative axial-directional displacement amount of the stud to the case, are provided at both end portions in an axial direction of the elastic body.

The vibration-isolating support device according to the present invention is such that when the compresses air in the air chamber of the air spring leaks, the portion of the air spring or the blocking member abuts on the stopper portions.

The vibration-isolating support device according to the present invention is such that compressed air from the air chamber of the air spring is supplied into a liquid chamber of the case containing the damping liquid.

The vibration-isolating support device according to the present invention is such that the compressed air is supplied via a gap between the stud and the elastic body from the air chamber to the liquid chamber.

An vibration-isolating support device according to the present invention has a cylindrical case whose one end is blocked, a stud arranged in the case, damping liquid contained in the case, and a damping member is fixed to the stud and dipped in the damping liquid, the device comprising: an air spring whose one end is supported to the stud directly or via another member and whose other end is supported to the case, wherein a relative lateral-directional displacement of the stud to the case is suppressed by the air spring.

The vibration-isolating support device according to the present invention is such that one end of the air spring is supported to the stud via a blocking member fixed to the stud and blocking an air chamber of the air spring.

The vibration-isolating support device according to the present invention is such that one end of the air spring is fixed by caulking to the blocking member.

The vibration-isolating support device according to the present invention is such that a lateral-directional stopper member abutting on the stud when the stud has a relative lateral-directional displacement with respect to the case up to or beyond a specified distance is mounted to the case.

The vibration-isolating support device according to the present invention is such that the air spring is of a bellows type.

The vibration-isolating support device according to the present invention comprises an outer cylindrical member covering at least a portion of an outer circumferential surface of the air spring.

The vibration-isolating support device according to the present invention is such that a partition member partitioning the air chamber of the air spring and the liquid chamber of the case containing the damping liquid is mounted to the case.

The vibration-isolating support device according to the present invention is such that the partition member is a diaphragm.

The vibration-isolating support device according to the present invention is such that a center portion of the diaphragm is sandwiched and fixed between the stud and the damping member.

The vibration-isolating support device according to the present invention is such that the case is formed of a first half body and a second half body assembled axially with each other, and an outer circumferential portion of the diaphragm is sandwiched and fixed between the first half body and a ring member or between the second half body and the ring member.

The vibration-isolating support device according to the present invention is such that a axial-directional stopper member abutting on the damping member to regulate a relative axial-directional displacement amount of the stud to the case is mounted on a side closer to the liquid chamber than the partition member of the case.

The vibration-isolating support device according to the present invention comprises a control valve provided between an air pressure source for supplying compressed air to an air chamber of the air spring and the air chamber to control the air pressure in the air chamber.

The vibration-isolating support device according to the present invention is such that the control valve is mounted integrally.

The vibration-isolating support device according to the present invention comprises position detecting means for detecting the relative axial-directional position of the stud to the case,
wherein the control valve is controlled based on the relative axial-directional position of the stud to the case detected by the position detecting means.

The vibration-isolating support device according to the present invention is such that the case is fixed to a lower running body of a construction machine, and the stud is fixed to a cab loaded onto the lower running body.

The vibration-isolating support device according to the present invention is such that the case is fixed to a carriage of a railroad vehicle, and the stud is fixed to a vehicle body of the railroad vehicle.

The vibration-isolating support device according to the present invention is such that the case is fixed to a wheel supporting portion rotatably supporting wheels of an automobile, and the stud is fixed to a vehicle body of the automobile.

According to the present invention, since the axial-directional load applied to the stud is supported by the air spring, the air pressure of the air chamber is varied so that the same vibration-isolating support device can be easily made responsive to a change of the load applied to the stud. Therefore, it is possible to increase the general versatility of the vibration-isolating support device and reduce the cost thereof.

Further, according to the present invention, the vibration with a high-frequency area applied between the case and the stud is absorbed by the air spring, and the vibration with a low frequency area is absorbed by the damping member and the elastic body. Also, with regard to an impact input given between the case and the stud, the elastic body or the air spring can suppress the lateral-directional displacement amount of the stud, and the air spring having an excellent vibration-isolation property can ease a vertically inputted load. Thus, since the axial-directional load of the stud is supported by the air spring, a spring constant for supporting the stud can be made small in comparison to the case of supporting the axial-directional load of the stud by the elastic body such as rubber, and the vibration-isolating property of this vibration-isolating support device can be enhanced.

Moreover, according to the present invention, since the compressed air is supplied from the air chamber of the air spring to the liquid chamber, it is possible to increase the liquid pressure of the damping liquid contained in the liquid chamber and suppress cavitation of the damping liquid, whereby a damping force by the damping member can be increased. Further, since the damping force increases, it is possible to make the damping member compact and make this vibration-isolating support device compact and lightweight.

Furthermore, according to the present invention, since the relative axial-directional displacement amount of the stud is regulated by the stopper portion, even if the axial-directional load of the stud is supported by the air spring, it is possible to prevent the air spring from being destroyed by the excessive relative displacement amount of the stud to the case due to an excessive load and prevent the damping member from interfering mechanically with a case bottom surface.

Moreover, according to the present invention, when the compressed air of the air chamber leaks and the air spring does not function, it is possible to support the load of the stud by the stopper portion and prevent the damping member from interfering mechanically with the case bottom surface.

Further, since the present invention has the outer cylindrical member that covers at least a portion of the outer circumferential surface of the air spring, it is possible to prevent the air spring from being damaged and, in particular when the relative lateral-directional displacement of the stud to the case is suppressed by the air spring, to prevent excessive shear deformation of the air spring.

Furthermore, since the present invention has the partition member that partitions the air chamber of the air spring and the liquid chamber of the case, even if the vibration-isolating support device vibrates largely or inclines, it is possible to prevent the damping liquid from moving to an air chamber side.

Moreover, in the case where the present invention has the partition member that partitions the air chamber of the air spring and the liquid chamber of the case, the axial-directional stopper member that abuts on the damping member to regulate the relative axial-directional displacement amount of the stud to the case is mounted at a place closer to a liquid chamber side than the partition member. Accordingly, in the case where the present invention has such a partition member, it is possible to prevent an excessive expansion from occurring in the air spring due to the excessive relative displacement amount of the stud to the case.

Further, according to the present invention, since the air valve of the air chamber can be adjusted more easily than the control valve, a spring force of the air spring can be easily set at a value depending on the axial-directional load applied between the case and the stud. Accordingly, despite the load applied to the stud, the height of the vibration-isolating support device is always made constant and the height of a member supported by it can be kept constant. Also, since the control valve is controlled based on the relative axial-directional position of the stud to the case, the air pressure of the air chamber can be automatically set according to a changes of the axial-directional load applied between the case and the stud, whereby it is possible to further easily set the spring force of the air spring.

Furthermore, according to the present invention, the vibration-isolating support device according to the present invention is used between the lower running body and the operating chamber of the construction machine, between the carriage and the vehicle body of the railroad vehicle, or between the wheel supporting portion and the vehicle body of the automobile. Therefore, it is possible to reduce vibration transmitted to the operating chamber and the vehicle body and improve the comfort rides of the construction machines, the railroad vehicles, and the automobiles.

### BRIEF DESCRIPTION OF THE DRAWINGS

FIG. 1 is a side view showing a hydraulic shovel provided with a vibration-isolating mount device according to an embodiment of the present invention;
FIG. 2 is a cross-sectional view taken along line A-A shown in FIG. 1;
FIG. 3 is a cross-sectional view showing a detail of a mount shown in FIG. 2;
FIG. 4 is a block diagram showing a control system of the mount shown in FIG. 2;
FIG. 5 is a cross-sectional view showing a modified example of a method of fixing an air spring and a plate;
FIG. 6 is a cross-sectional view showing a modified example of a method of supporting the air spring at a stud;
FIG. 7 is a front view showing a railroad vehicle to which the vibration-isolating support device according to the present invention is applied;
FIG. 8 is a cross-sectional view showing a substantial part of a truck to which the vibration-isolating support device according to the present invention is applied;
FIG. 9 is a cross-sectional view showing an vibration-isolating mount device according to another embodiment of the present invention; and
FIG. 10 is a cross-sectional view showing a case where a diaphragm shown in FIG. 9 is applied to the mount shown in FIG. 3 and an elastic body is made short axially.

### BEST MODE FOR CARRYING OUT THE INVENTION

Hereinafter, embodiments according to the present invention will be detailed with reference to the accompanying drawings.

As shown in FIG. 1, a vehicle body 11 of a hydraulic shovel 10 as a construction machine has a lower running body 12, and a turntable 13 is provided rotatably to the lower running body 12. The lower running body 12 is of a truck type equipped with a truck carrier 15 bridged between sprockets 14, but it may be a lower running body which is of a crawler type using a crawler belt or a wheel type using wheels. A boom 16 is attached vertically swingably to the turntable 13, an arm 17 is attached vertically swingably to a tip of the boom 16, and a bucket 18 is attached vertically shakably to a tip of the arm 17. In order to swing the boom 16 vertically, a hydraulic cylinder 19a is provided between the turntable 13 and the boom 16 and in order to swing the arm 17 vertically, a hydraulic cylinder 19b is provided between the boom 16 and the arm 17. Further, the bucket 18 is driven so as to be shaken by the hydraulic cylinder 19c.

An operating chamber also called a cab box, namely, a cab 20 is loaded on the turntable 13, and operations of the boom 16, the arm 17, the bucket 18, and the vehicle body 11 are performed by an operator ridden into the cab 20. The cab 20 is formed into a box shape having a bottom wall portion 20a, a ceiling wall portion 20b, a left and right side wall portions 20c, and a front and back side wall portions 20d. A door 21 opened and closed when the operator gets in and out is mounted openably and closably on the left and right side wall portions 20c. The door 21 and the front and back side wall portions 20d are provided with transparent glass plates 22 for securing external visions of the operator.

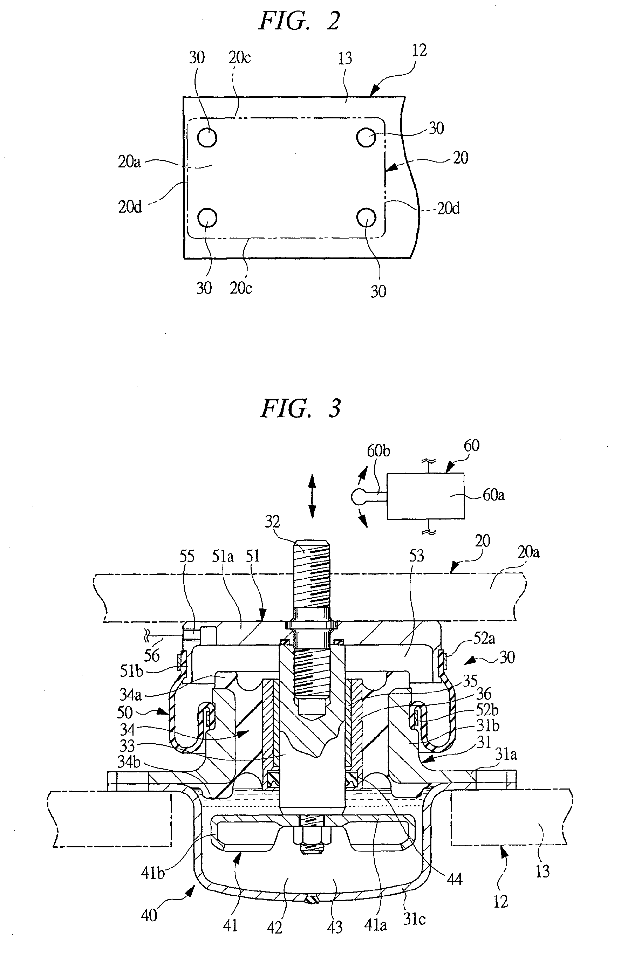

FIG. 2 is a cross-sectional taken view along line A-A shown in FIG. 1, and four vibration-isolating mount devices 30 (hereinafter referred to as "mounts" 30) that elastically support the cab 20 vertically and horizontally swingably are provided between the bottom wall portion 20a and the turntable 13 of the cab 20. These mounts 30 as vibration-isolating support devices are disposed at four corners of the bottom wall portion 20a of the cab 20, i.e., two of the four mounts 30 are separately disposed at left and right hands on a front end portion side of the cab 20, and other two are separately disposed at left and right hands on a back end portion side of the cab 20.

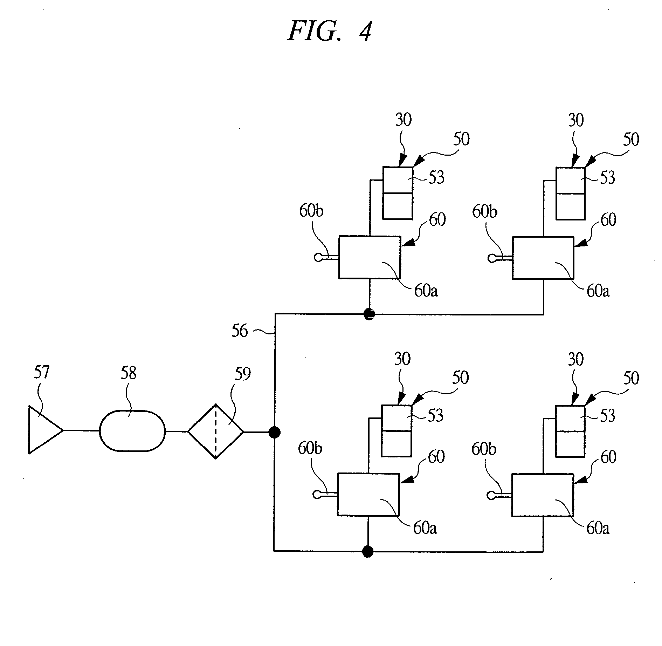

FIG. 3 is a cross-sectional view showing a detail of the mount shown in FIG. 2, and FIG. 4 is a block diagram showing a control system of the mount shown in FIG. 2.

As shown in FIG. 3, each of these mounts 30 has a case 31 that is fixed onto the turntable 13 provided above the lower running body 12 by an unshown fastening member, and a stud 33 that is fixed onto the bottom wall portion 20a of the cab 20 by a bolt 32. The case 31 has a cylindrical portion 31b as a first half body formed integrally with an attachment plate 31a and a lid portion 31c as a second half body formed into a cup cross section, and these are assembled axially with each other, which results in being formed into a cylindrical shape whose one end is closed as a whole. On the other hand, the stud 33 is formed into a bar shape of a circular cross section, and is disposed inside the case 31 so as to be directed toward an axial direction of the case 31, i.e., a vertical and axial directions of the vehicle body 11.

In order to support the stud 33 to the case 31, an elastic body 34 is mounted inside the cylindrical portion 31b of the case 31. This elastic body 34 is made of, for example, a rubber material or the like and formed into a cylindrical shape, and the stud 33 is supported on an inner surface of the elastic body 34 via a slide bearing 35 and a sleeve 36. Thereby, the stud 33 is supported axially movably by the elastic body 34, and radial-directional, i.e., relative lateral-directional displacement to the case 31 is suppressed by elasticity of the elastic body 34. Accordingly, the axial-directional, i.e., vertical vibration and load between the case 31 and the stud 33 are not applied to the elastic body 34, while the lateral-directional vibration of the stud 33 is absorbed by elastic deformation of the elastic body 34.

This mount 30 is provided with a damping mechanism 40 for damping vibration and impact in the vertical and lateral directions occurring between the case 31 and the stud 33 at a time of working and running. The damping mechanism 40 has a damping member 41, and this damping member 41 has an end plate portion 41a and a cylindrical portion 41b and is fixed to one end of the stud 33 (end portion on a side of the lid portion 31c) in the end plate portion 41a. On the other hand, a liquid chamber 42 is partitioned and formed inside the case 31 by the lid portion 31c and the elastic body 34, and damping liquid 43 of, for example, silicon oil and the like is contained in this liquid chamber 42. The damping member 41 is dipped in this damping liquid 43 and, when the vibration in the vertical and lateral directions is applied between the case 31 and the stud 33, moves in the damping liquid 43 and is subjected to viscosity resistance of the damping liquid 43 inside the liquid chamber 42. Thereby, vibration energy of the stud 33 is converted into motion energy of the damping liquid 43, whereby the vibration and impact applied to the stud 33 are damped. Thus, by this damping mechanism 40, the vibration and impact between the case 31 and the stud 33 are damped.

Incidentally, a through hole through which the damping liquid 43 passes may be formed in the end plate portion 41a to adjust a damping force.

A seal member 44 as a lip packing such as a U packing is incorporated between the sleeve 36 and the stud 33 so as to be located on a side of the liquid chamber 42. This seal member 44 is disposed so that its lip portion is directed to a side of the liquid chamber 42, wherein the damping liquid 43 is prevented from leaking from the liquid chamber 42.

An air spring 50 is provided on a side opposite to the damping mechanism 40 of the case 31, and the axial-directional load between the case 31 and the stud 33 is supported by the air spring 50. This air spring 50 is a bellows type made of, for example, a rubber material or the like and formed into a cylindrical shape having flexibility, and one axial-directional end of the air spring is supported by other end of the stud 33 via a plate 51 as another member, i.e., a blocking member.

In this case, the plate 51 is formed into a lid shape having a disk end plate portion 51a and a cylindrical portion 51b provided on an outer circumference of the end plate portion 51a, and is fixed to the other end of the stud 33 (end portion on a side of the cab 20) by the bolt 32 at a shaft core of the end plate portion 51a. Further, one end of the air spring 50 is covered with an outer circumference of the cylindrical portion 51b and fastened by a band 52a from the outside thereof, thereby being fixed to the cylindrical portion 51b. On the other hand, the other end of the air spring 50 is covered with an outer circumference of the cylindrical portion 31b of the case 31 and fastened by a band 52b from the outside thereof and fixed to the case 31, thereby being supported to the case 31.

An air chamber 53 is partitioned and formed inside the air spring 50, with one end thereof being blocked by the plate 51 and with the other end thereof being blocked by the case 31 and the elastic body 34. When compressed air is supplied to this air chamber 53 from a suction/exhaust port 55 formed in the plate 51, air pressure in the air chamber 53 increases and an upward axial-directional spring force occurs in the plate 51, so that, by this spring force, the axial-directional load applied from the cab 20 to the stud 33 is supported. That is, by the spring force that the air spring generates, the load of the cab 20 can be supported.

Thus, in this mount 30, since the axial-directional load between the case 31 and the stud 33 is supported by the air spring 50, the spring force of the air spring 50 can be easily set to a value depending on the load applied from the cab 20 to the stud 33 by varying the air pressure of the air chamber 53. Accordingly, even when the load applied to the stud 33 becomes different including the case where the weight and the position of the gravity center of the cab 20 are different, the same mount 30 can be used, whereby it is possible to enhance the general versatility of the mount 30 and reduce the cost thereof. Further, since the air spring 50 is used, the spring force can be made smaller than the case of supporting the load of the stud 33 directly by the elastic body such as rubber fixed to the case 31, whereby the vibration-isolating property of this mount 30 can be improved. Accordingly, the vibration transmitted from the lower running body 12 to the cab 20 is reduced sufficiently by the air spring 50, so that the comfort ride of the cab 20, i.e., the hydraulic shovel 10 can be improved.

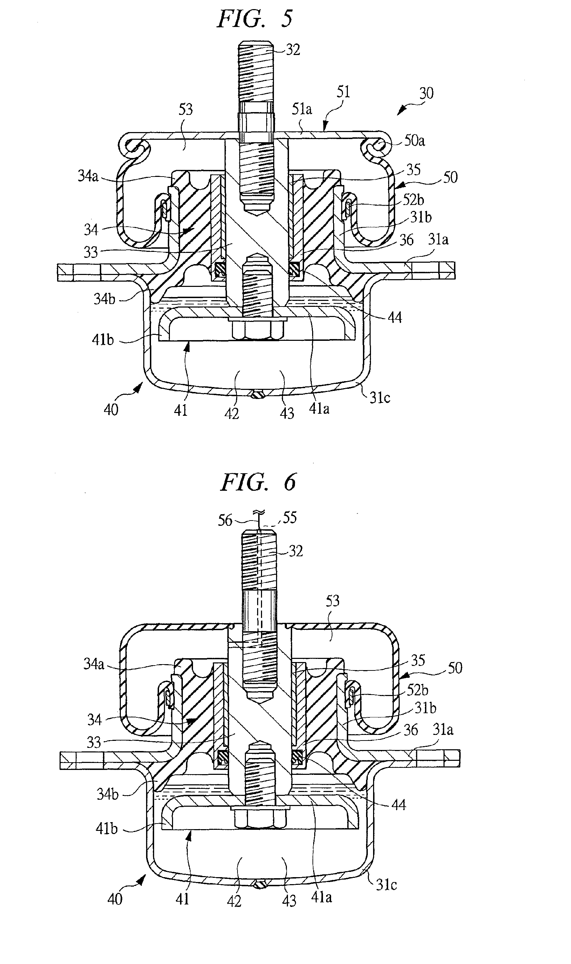

Incidentally, in the case shown in FIG. 3, although one end of the air spring 50 is fixed to the plate 51 by the band 52a, the present invention is not limited to this and, for example as shown in FIG. 5, the plate 51 as a blocking member may be formed into a disk shape to fix one end of the air spring 50 to an outer circumferential portion thereof by caulking. In this case, a bead 50a (astragal) is formed at one end of the air spring 50, and the outer circumferential portion of the plate 51 is rounded inward so as to cover this bead 50a. Thereby, when compressed air is supplied into the air chamber 53, the air spring 50 swells outward by the air pressure so as to be centered about the bead 50a and causes a self seal function, wherein a seal property of a fixation portion between the plate 51 and the air spring 50 is increased.

Thus, since the air spring 50 is fixed to the plate 51 by caulking, a sealing property of the air chamber 53 can be increased. Further, since the air spring 50 can be fixed to the plate 51 without using another member such as the band 52a, it is possible to reduce the number of parts, i.e., the cost of this mount 30.

Further, in the mount 30 shown in FIG. 3, although one end of the air spring 50 is supported to the stud 33 via the plate 51, the present invention is not limited to this and, for example as shown in FIG. 6, one end of the air spring 50 may be supported directly to the stud 33 without using the plate 51. In this case, one end of the air spring 50 is formed with an outer diameter smaller than an outer diameter of the stud 33 and is fixed to an end surface of the stud 33 by adhesion or the like. Thereby, one end of the air spring 50 is blocked and supported by the stud 33.

Thus, since one end of the air spring 50 is supported directly by the stud 33, the plate 51 becomes unnecessary, whereby the cost of the mount 30 can be reduced.

Incidentally, if being shown in the drawings, one end of the air spring 50 is provided with an opening portion having an outer diameter smaller than the outer diameter of the stud 33. However, the present invention is not limited to this, and the one end may be formed into a completely blocked bag shape. Further, as shown in FIG. 6, in a type in which one end of the air spring 50 is directly supported by the stud 33, for example, the suction exhaust port 55 may be provided at a top of the bolt 32 and, via a flow path formed axially at a center portion of the bolt 32 and a flow path formed in a radial direction of the stud 33, compressed air may be supplied to the air chamber 53.

In this mount 30, since the lip portion of the sealing member is disposed toward a side of the liquid chamber 42 containing the damping liquid 43, the seal member 44 as a lip packing prevents a leakage of the damping liquid 43 from the liquid chamber 42 to the air chamber 53 and permits a flow of the compressed air flowing from the air chamber 53 to the liquid chamber 42 via a gap between the stud 33 and the elastic body 34, i.e., the sleeve 36. Namely, the seal member 44 can prevent the leakage of the damping liquid 43 from the liquid chamber 42 to the air chamber 53 and supply the compressed air in the air chamber 53 to the liquid chamber 42, via the gap between the stud 33 and the elastic body 34, i.e., the sleeve 36. Thereby, internal pressure in the liquid chamber 42, i.e., liquid pressure of the damping liquid 43 contained in the liquid chamber 42 is increased by the compressed air supplied from the air chamber 53, whereby it is possible to suppress a cavity phenomenon, i.e., cavitation caused when the damping member 41 moves in the damping liquid 43 and to increase the damping force of the damping mechanism 40.

Thus, in this mount 30, since the compressed air in the air chamber 53 is supplied to the liquid chamber 42, it is possible to increase the liquid pressure of the damping liquid 43 contained in the liquid chamber 42 and suppress the cavitation and thereby increase the damping force by the damping mechanism 40, i.e., the damping member 41. Further, the damping force is determined by a product of internal pressure applied to the damping liquid 43 and a radial-directional cross-sectional area of the end plate portion 41a of the damping member 41, so that even if the internal pressure is increased and the radial-directional cross-sectional area of the end plate portion 41a is made small, it is possible to generate the damping force at the same level. Accordingly, the damping member 41, the case 31, and the like can be made compact, whereby the mount 30 can be made compact and lightweight.

Incidentally, in the present embodiment, the compressed air is supplied from the air chamber 53 to the liquid chamber 42 via the gap between the stud 33 and the elastic body 34. However, the present invention is not limited to this and so long as the leakage of the damping liquid 43 is prevented, the compressed air may be supplied to the liquid chamber 42 via a supply flow path and the like provided in other portions. Further, in the present embodiment, the compressed air in the air chamber 53 is supplied to the liquid chamber 42. However, the present invention is not limited to this and may have a structure in which, for example, a seal member for preventing the leakage of the compressed air from the air chamber 53 to the liquid chamber 42 is mounted between the stud 33 and the elastic body 34, i.e., the sleeve 36 in addition to the seal member 44 and the compressed air in the air chamber 53 is not supplied to the liquid chamber 42.

In this mount 30, since the load of the stud 33 is supported by the air spring 50, when an excessive load is applied between the case 31 and the stud 33, there is any fear in which the relative displacement amount of the stud 33 to the case 31 may become excessively large. Therefore, stopper portions 34a and 34b protruding axially from an end portion of the cylindrical portion 31b of the case 31 are provided integrally to both axial-directional end portions of the elastic body 34, and the relative displacement amount that is stroke in the axial direction of the stud 33 with respect to the case 31 is regulated by these stopper portions 34a and 34b,.

The stopper portion 34a protruding toward a side of the plate 51 with respect to the cylindrical portion 31b abuts on the plate 51 when the stud 33 displaces downward largely to the case 31, so that further movement of the stud 33 is regulated. Further, when the compressed air in the air chamber 53 leaks and the air spring 50 does not function, the plate 51 abuts on the stopper portion 34a, whereby the load of the stud 33 is supported by the stopper portion 34a, i.e., the elastic body 34. On the contrary, the stopper portion 34b protruding toward a side of the liquid chamber 42 with respect to the cylindrical portion 31b abuts on the damping member 41 when the stud 33 displaces upward largely with respect to the case 31, so that the further movement of the stud 33 is regulated. Incidentally, in the case where one end of the air spring 50 is supported directly to the stud 33 as shown in FIG. 6, a portion opposite to the stopper 34a of the air spring 50 itself abuts on the stopper 34a, wherein the stroke of the stud 33 is regulated.

Thus, even when the load in the axial direction is supported by the air spring 50, the stroke of the stud 33 is regulated within a specified range by the stopper portions 34a and 34b. Therefore, even if the load in the axial direction becomes large or there is a large input of vibration, the relative displacement amount of the stud 33 to the case 31 does not become excessive and the air spring 50 of the mount 30 can be prevented from being damaged. Further, when the compressed air in the air chamber 53 leaks and the air spring 50 does not function, the load of the stud 33 can be supported by the stopper portion 34a and the damping member 41 can be prevented from mechanically interfering with a bottom surface of the case 31.

A flow path 56 is connected to the suction exhaust port 55 formed in the plate 51 and, as shown in FIG. 4, the air chamber 53 is connected via this flow path 56 to an air pressure source 57. A compressor or the like, which is loaded on the vehicle body 11 and driven by an unshown engine or the like, is used as the air pressure source 57, and specified-pressure compressed air discharged from this air pressure source 57 is supplied via the flow path 56 to the air chamber 53 of each mount 30. Further, a space between the air pressure source 57 and the mount 30 is provided with: a reservoir tank 58 (accumulator) for reducing a pulsing motion and a pressure drop of the compressed air; a filter 59 for removing dust and drain in the compressed air; and the like. Incidentally, the suction exhaust port 55 is not limited to the plate 15 and may be provided with any member, such as the cylindrical portion 31b of the case 31, so long as the compressed air can be supplied to the air chamber 53.

A leveling valve (automatic height adjusting valve) 60 is provided between the air pressure source 57 and the air chamber 53 of each mount 30, whereby the compressed air supplied to each mount 30, i.e., the air pressure of each air chamber 53 is controlled individually by these leveling valves 60. As shown in FIG. 3, the leveling valve 60 has a valve main body portion 60a as a control valve fixed to the turntable 13 and a control lever 60b provided swingably in the valve main body portion 60a. The control lever 60b is coupled to the stud 33 via an unshown link or the like, thereby moving in conjunction with an up-and-down movement of the stud 33. Further, the valve main body portion 60a is controlled by the control lever 60b, thereby switching, according to positions of the control lever 60b, a state of communicating with the air pressure source 57 and the suction exhaust port 55 and a state of opening the suction exhaust port 55 to an atmosphere. That is, the control lever 60b has a function as position detecting means for detecting a relative axial-directional position of the stud 33 to the case 31, and the valve main body portion 60a is controlled based on the relative axial-directional position of the stud 33 to the case 31, which is detected by the control lever 60b.

By such a structure, when the axial-directional load applied from the cab 20 to the stud 33 increases and the attaching height of the cab 20 is equal to or lowered below a specified position, the valve main body portion 60a is switched, by the control lever 60b interconnecting with the stud 33, to the state of communicating with the air pressure source 57 and the suction exhaust port 55. And, the compressed air is supplied from the air pressure source 57 to the suction exhaust port 55 and the air pressure of the air chamber 53, i.e., a spring force applied to the stud 33 increases, whereby the stud 33 pushes up the cab 20. To the contrary, in the case where the axial-directional load applied from the cab 20 to the stud 33 decreases and the attaching height of the cab 20 is equal to or rises over the specified position, the valve main body portion 60a is switched, by the control lever 60b, to the state of opening the suction exhaust port 55 to the atmosphere. Thereby, the air pressure inside the air chamber 53 decreases and the spring force applied to the stud 33 decreases, whereby the position of the cab 20 is lowered. And, when the cab 20 is at a regulated position, such a condition is maintained that the control lever 60b is at its neutral position and the air pressure inside the air chamber 53 is kept constant. In this case, since the control of the respective mounts 30 is carried out by the respectively individual leveling valves 60, for example even when the weight or gravity center of the cab 20 varies, the control of the respective mounts 30 is carried out automatically according to such variation and the attaching height and levelness of the cab 20 are always maintained constant.

Thus, in this mount 30, since the valve main body portion 60a is automatically controlled by the control lever 60b based on the relative axial-directional position of the stud 33 to the case 31, the air pressure in the air chamber 53 is automatically set in response to a change of the axial-directional load applied between the case 31 and the stud 33. Accordingly, it is possible to easily set the spring force of this mount 30.

Incidentally, in the present embodiment, the air pressure in the air chamber 53 is automatically adjusted based on the relative position of the stud 33 by using the leveling valve 60 having the valve main body portion 60a as a control valve and the control lever 60b as position detecting means. However, the present invention is not limited to this, and the air pressure may be set by manually operating the valve main body portion 60a. Also in this case, since the air pressure in the air chamber 53 can be easily adjusted by the valve main body portion 60a, the spring force of the air spring can be easily set to a value depending on the axial-directional load applied between the case 31 and the stud 33.

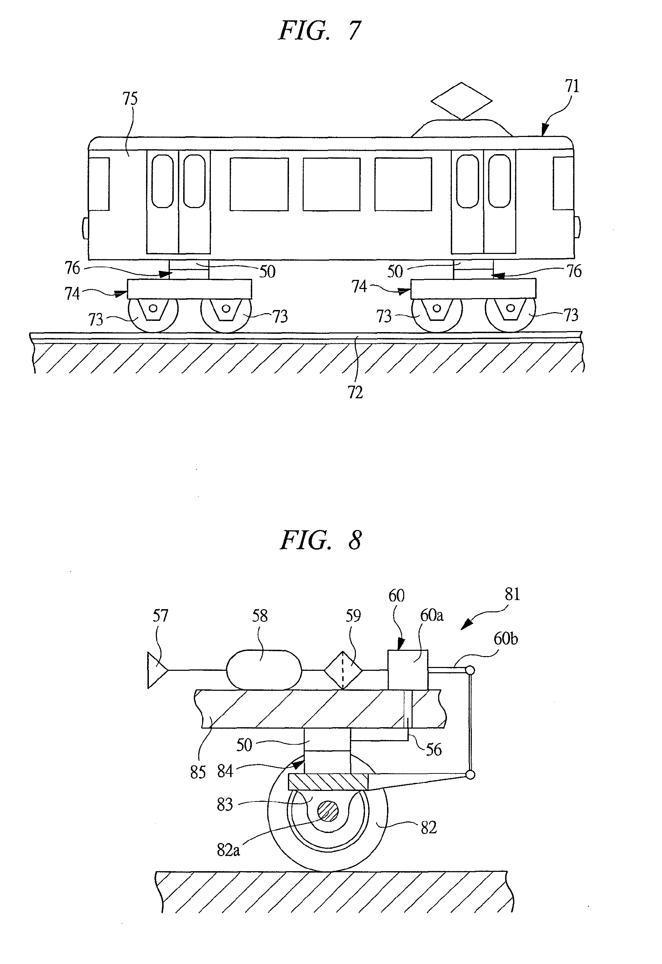

FIG. 7 is a front view showing a railroad vehicle to which a vibration-isolating support device according to the present invention is applied, and FIG. 8 is a cross-sectional view showing a substantial part of a truck to which a vibration-isolating support device according to the present invention is applied. Incidentally, in FIG. 7 and FIG. 8, the same reference numerals are denoted to members corresponding to the previously described members.

As shown in FIG. 7, a railroad vehicle 71 has carriages 74 equipped with wheels 73 that are engaged with rails 72 laid on a road surface, wherein the wheels 73 are driven by an unshown driving source such as an electric motor so as to run along the rails 72. A vehicle body 75 on which an operating room and a passenger's room are provided is loaded above the carriage 74, and the vehicle body 75 runs with the carriage 74. And, a vibration-isolating support device 76 having the same structure as that of the mount 30 shown in FIG. 3 is mounted, as a so-called bolster spring, between the carriage 74 and the vehicle body 75. In this case, the case of the vibration-isolating support device 76 is fixed to the carriage 74, and the stud is fixed to the vehicle body 75. Thereby, the load of the vehicle body 75 is supported by the air spring 50 of the vibration-isolating support device 76, and the vibration occurring between the carriage 74 and the vehicle body 75 during the running is absorbed by the vibration-isolating support device 76.

On the other hand, a truck 81 shown in FIG. 8 is an automobile having a wheel 82, and this wheel 82 is supported rotatably at its wheel shaft 82a by a wheel supporting portion 83 as, for example, an axel case or the like. This wheel supporting portion 83 is attached to the vehicle body 85 via an vibration-isolating support device 84 having the same structure as that of the mount 30 shown in FIG. 3. In this case, the case of the vibration-isolating support device 84 is fixed to the wheel supporting portion 83, and the stud is fixed to the vehicle body 85. Thereby, the load of the vehicle body 85 is supported by the air spring 50 of the vibration-isolating support device 84, and the vibration occurring between the wheel supporting portion 83 and the vehicle body 85 during running and the like is absorbed by the vibration-isolating support device 84. Further, also in this case, the height of the vehicle body 85 to the wheel supporting portion 83 can be automatically controlled by the leveling valve 60 loaded on the vehicle body 85.

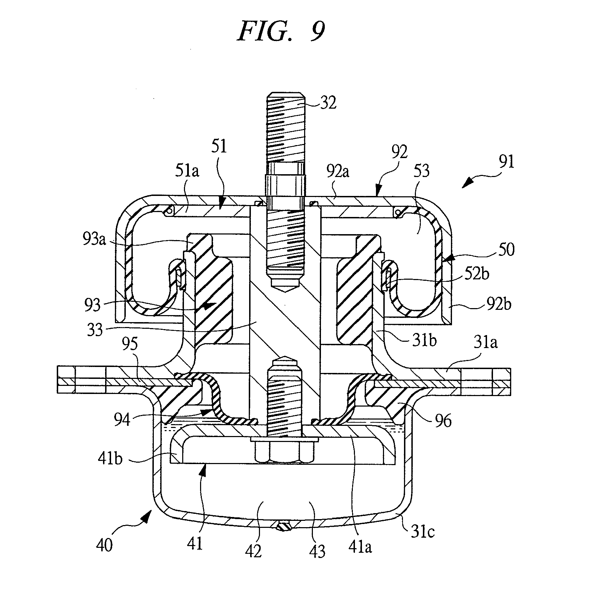

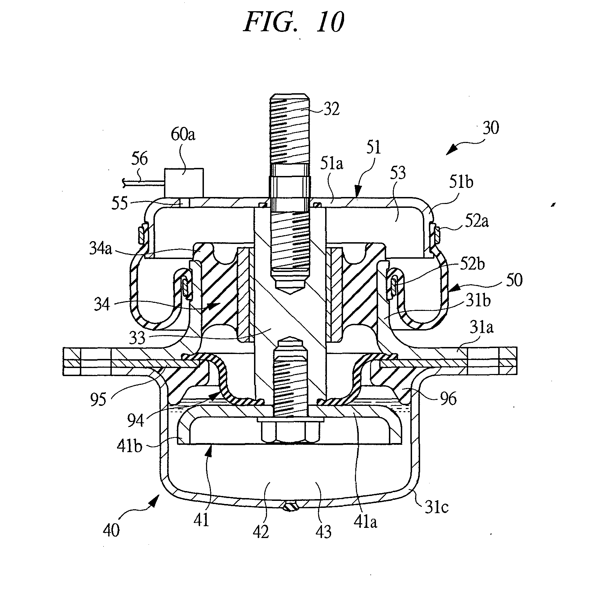

FIG. 9 is a cross-sectional view showing a vibration-isolating mount device according to another embodiment of the present invention, and FIG. 10 is a cross-sectional view showing a case where a diaphragm shown in FIG. 9 is applied to the mount shown in FIG. 3 as well as a case where an elastic body is made short axially. Incidentally, in FIG. 9 and FIG. 10, the same reference numerals are denoted to members corresponding to the previously described members.

In the mount 30 shown in FIG. 3, the relative lateral-directional displacement of the stud 33 to the case 31 is suppressed by the elastic body 34 mounted in the case 31. However, the elastic body 34 is not provided in the vibration-isolating support device shown in FIG. 9, i.e., a vibration-isolating mount device 91 (hereinafter referred to as "mount" 91), and the relative lateral-directional displacement of the stud 33 to the case 31 is controlled by the air spring 50.

In this case, at an end portion of the stud 33 located on the side of the cab 20, an outer cylindrical member 92 is mounted on the plate 51. This outer cylindrical member 92 is formed of, for example, a steel plate or the like, and its disk-shaped bottom wall portion 92a is fixed to the end portion of the stud 33 by the bolt 32. Further, the outer cylindrical member 92 has a cylinder-shaped outer cylindrical portion 92b formed integrally with the bottom wall portion 92a, and at least a portion of an outer circumferential surface of the air spring 50 is covered with this outer cylindrical portion 92b. Thereby, radial-directional deformation of the air spring 50 that occurs along with the movement of the stud 33 is suppressed by the outer cylindrical member 92, and excessive shear deformation of the air spring 50 can be prevented. Further, the stud 33 is held near a position of the shaft core of the case 31 by lateral rigidity of the air spring 50. Accordingly, even when the elastic body 34 is not provided, the relative lateral-directional displacement of the stud 33 to the case 31 is suppressed by the air spring 50, whereby the stud 33 can be held at the specified position.

Incidentally, if being shown in the drawings, the outer cylindrical member 92 is mounted on the mount 91. However, the present invention is not limited to this and may be also one on which the outer cylindrical member 92 is not mounted. Further, also in the mount 91, one end of the air spring 50 may be, as shown in FIG. 5, fixed to the plate 51 by caulking, or one end of the air spring 50 may be, as shown in FIG. 6, supported directly to the stud 33.

In this mount 91, a lateral-directional stopper member 93 is mounted on an inner circumferential surface of the case 31, and the lateral-directional stroke of the stud 33 is limited by this lateral-directional stopper member 93.

This lateral-directional stopper member 93 is made of an elastic material such as a rubber material and formed into a cylindrical shape having a through hole whose diameter is sufficiently larger than the outer diameter of the stud 33, and the stud 33 is provided inside this through hole. The stud 33 in a normal working state moves freely without abutting on the lateral-directional stopper member 93, but abuts on the lateral-directional stopper member 93 to regulate further movement thereof when being displaced relatively laterally, i.e., radially with respect to the case 31 up to or beyond a specified distance. Thus, since the lateral-directional stroke of the stud 33 is limited by the lateral-directional stopper member 93, it is possible to prevent the excessive shear deformation of the air spring 50 occurring when an excessive load is applied to the stud 33. Further, since the lateral-directional stopper member 93 is formed of an elastic material such as a rubber material, it absorbs the impact occurring when the stud 33 abuts on the lateral-directional stopper member contacts, thereby making it possible to prevent the mount 91 from being damaged.

In the mount 30 shown in FIG. 3, the air chamber 53 and the liquid chamber 42 are separated by the seal member 44. However, since the elastic body 34 is not provided in this mount 91, a diaphragm 94 as a partition member is mounted in the case 31 so that the air chamber 53 and the liquid chamber 42 are partitioned by this diaphragm 94. This diaphragm is made of a rubber material or the like and formed into a disk shape with flexibility, so that a center portion thereof is fixed to the stud 33 in a state of being sandwiched between the stud 33 and the damping member 41. Further, a ring member 95 is inserted between the cylindrical portion 31b and the lid portion 31c that constitute the case 31, and an outer circumferential portion of the diaphragm 94 is sandwiched between the cylindrical portion 31b and the ring member 95 and fixed to the case 31.

Thereby, the air chamber 53 and the liquid chamber 42 are partitioned by the diaphragm 94, whereby it is possible to prevent the compressed air in the air chamber 53 from entering the liquid chamber 42 or the damping liquid 43 in the liquid chamber 42 from entering the air chamber 53. Further, even when the stud 33 displaces axially or laterally, the diaphragm 94 is freely elastically deformed according to the displacement to follow the movement of the stud 33, so that the air chamber 53 and the liquid chamber 42 can be separated securely by the diaphragm 94 without interfering with action of the stud 33.

Incidentally, the partition member is not limited to the diaphragm 94, and may be any members, which can be mounted on the case 31 to partition the air chamber 53 and the liquid chamber 42, for example including a disk-shaped member having a through hole through which the stud 33 passes. Further, an outer circumferential portion of the diaphragm 94 may be sandwiched and fixed between the lid portion 31c and the ring member 95.

Also in this mount 91, when large vertical vibration is applied, it is necessary to regulate the relative axial-directional (downward-directional) displacement amount of the stud 33 to the case 31. For this reason, a stopper portion 93a is formed in one axial-directional end of the lateral-directional stopper member 93 (on a side of the plate 51), so that when the stud 33 displaces largely downward to the case 31, this stopper portion 93a abuts on the plate 51 to regulate the further movement of the stud 33. Further, even when the compressed air in the air chamber 53 leaks and the air spring 50 does not function, the plate 51 abuts on the stopper portion 93a, thereby supporting the load of the stud 33 by the lateral-directional stopper member 93. That is, this stopper portion 93a has the same function as that of the stopper portion 34a of the elastic body 34 in the mount 30 shown in FIG. 3.

On the other hand, in the structure for partitioning the air chamber 53 and the liquid chamber 42 by the diaphragm 94, since the end portion of the lateral-directional stopper member 93 on a side of the liquid chamber 42 is isolated from the liquid chamber 42 by the diaphragm 94, it is not possible to make the end portion of the lateral-directional stopper member 93 abut on the damping member 41. For this reason, in this mount 91, a axial-directional stopper member 96 is mounted on a side closer to the liquid chamber 42 than the diaphragm 94 of the case 31, and the damping member 41 is made to abut on this axial-directional stopper member 96 so that the relative axial-directional (upward-directional) displacement amount of the stud 33 to the case 31 is regulated within a specified range. Thereby, it is possible to prevent excessive elongation by the air spring 50 of the mount 91 from occurring due to excess of the relative axial-directional displacement amount of the stud 33 to the case 31 by the excessive load.

Incidentally, a partition structure by this diaphragm 94 is not limited to the mount 91 in which the lateral-directional displacement of the stud 33 is suppressed by the air spring 50 without the elastic body 34, and such a structure may be also applied to the mount 30 shown in FIG. 3. In this case, as shown in FIG. 10, the seal member 44 mounted between the sleeve 36 and the stud 33 is not provided and, instead of the seal member, the diaphragm 94 having the same structure as that of the mount 91 shown in FIG. 9 is mounted between the case 31 and the stud 33. Further, also in this case, the axial-directional stopper member 96 may be mounted on a side closer to the liquid chamber 42 than the diaphragm 94 of the case 31.

Needless to say, the present invention is not limited to the above embodiments and may be variously modified within a scope of not departing from the gist thereof. For example, in the present embodiment, a bellows type one is used as an air spring, but the present invention is not limited to this and, for example, the air spring may be any member that has flexibility and enables to partition and form the air chamber 53, such as a diaphragm type one or a sleeve type one.

Further, in the present embodiment, the relative position of the case 31 and the stud 33 is detected by the control lever 60b functioning as position detecting means, and the valve main body portion 60a as a control valve is controlled by this control lever 60b. However, the present invention is not limited to this and, for example, by a controller provided with a CPU, a memory, and the like that detects the relative position of the case 31 and the stud 33 by using a mechanical sensor or an electric, magnetic sensor and to which the detection signal is inputted, the valve main body portion 60a, i.e., for example, an electromagnetic valve or the like may be driven.

Furthermore, in the present embodiment, the valve main body portion 60a as a control valve is arranged apart from the mount 30 itself. However, the present invention is not limited to this and, for example as shown in FIG. 10, the valve main body portion 60a may be mounted integrally on the mount 30, by fixing the valve main body portion 60a onto the end plate portion 51a of the plate 51.

Moreover, in the present embodiment, the air pressure source 57 is connected to the air chamber 53 via the valve main body portion 60a so that the air pressure in the air chamber 53 can be increased or decreased easily. However, the present invention is not limited to this and may be such that the air pressure source 57 and the valve main body portion 60a are not provided and the compressed air is supplied to the air chamber 53 up to the specified air pressure and then the suction exhaust port 55 is blocked by a tap.

Further, the present embodiment shows the case where the vibration-isolating support device according to the present invention is applied to the hydraulic shovel 10, the railroad vehicle 71, and the truck 81. However, the present invention is not limited to this, and may be applied to other construction machines, vehicles, and the like. Also, in addition to the construction machines, vehicles, and the like, it may be mounted between members between which a load or vibration is transmitted mutually.

Furthermore, in the present embodiment, the four vibration-isolating mount devices 30 are arranged at the four corners of the bottom wall portion 20a of the cab 20. However, the present invention is not limited to this, and the number of devises may be set arbitrarily so long as the cab 20 can be supported.

Moreover, the present embodiment shows a type in which the leveling valve 60 is provided at each of the respective mounts 30 and the air pressure of each mount 30 is controlled individually. However, the present invention may have such a structure that a sensor that detects a vertical position (height) of the cab 20 is provided just under a center portion of the cab 20 and the air pressure of the respective mounts 30 is integrally controlled based on outputted information of this sensor. Also, the present invention may have such a structure that: sensors that detect a vertical position (height) of the cab 20 are each provided just under a center position between left and right hands at a front side of the cab 20 and a center position between left and right hands at a back side; the air pressure of the respective mounts 30 of the left and right hands at the front side is controlled based on the outputted information of the sensor provided at the front side; and the air pressure of the respective mounts 30 of the left and right hands at the back side is controlled based on the outputted information of the sensor provided at the back side. Furthermore, the present may have such a structure that: sensors that detect a vertical position (height) of the cab 20 are each provided just under a center portion between a front and back sides at the left hand and a center portion between a front and back sides at the right hand; the air pressure of the respective mounts 30 of the front and back sides at the left hand is controlled based on the outputted information of the sensor provided at the left hand; and the air pressure of the respective mounts 30 of the front and back sides at the right hand is controlled based on the outputted information of the sensor provided at the right hand.

### INDUSTRIAL APPLICABILITY

The present invention may be applied in supporting a load between members and preventing transmission of vibration between the members.

## Claims

1. An vibration-isolating support device having a cylindrical case whose one end is blocked, a stud arranged in the case, damping liquid contained in the case, and a damping member fixed to the stud and dipped in the damping liquid, the device comprising:
an elastic body mounted on the case, supporting the stud axially movably, and suppressing a relative lateral-directional displacement of the stud to the case; and
an air spring whose one end is supported to the stud directly or via another member and whose other end is supported to the case.

2. The vibration-isolating support device according to claim 1, wherein one end of the air spring is supported to the stud via a blocking member fixed to the stud and blocking an air chamber of the air spring.

3. The vibration-isolating support device according to claim 2, wherein one end of the air spring is fixed by caulking to the blocking member.

4. The vibration-isolating support device according to any one of claims 1 to 3, wherein stopper portions, each abutting on a portion of the air spring or the blocking member or abutting on the damping member to regulate a relative axial-directional displacement amount of the stud to the case, are provided at both end portions in an axial direction of the elastic body.

5. The vibration-isolating support device according to claim 4, wherein when the compresses air in the air chamber of the air spring leaks, the portion of the air spring or the blocking member abuts on the stopper portions.

6. The vibration-isolating support device according to any one of claims 1 to 5, wherein compressed air from the air chamber of the air spring is supplied into a liquid chamber of the case containing the damping liquid.

7. The vibration-isolating support device according to claim 6, wherein the compressed air is supplied via a gap between the stud and the elastic body from the air chamber to the liquid chamber.

8. An vibration-isolating support device having a cylindrical case whose one end is blocked, a stud arranged in the case, damping liquid contained in the case, and a damping member is fixed to the stud and dipped in the damping liquid, the device comprising:
an air spring whose one end is supported to the stud directly or via another member and whose other end is supported to the case,
wherein a relative lateral-directional displacement of the stud to the case is suppressed by the air spring.

9. The vibration-isolating support device according to claim 8, wherein one end of the air spring is supported to the stud via a blocking member fixed to the stud and blocking an air chamber of the air spring.

10. The vibration-isolating support device according to claim 9, wherein one end of the air spring is fixed by caulking to the blocking member.

11. The vibration-isolating support device according to any one of claims 8 to 10, wherein a lateral-directional stopper member abutting on the stud when the stud has a relative lateral-directional displacement with respect to the case up to or beyond a specified distance is mounted to the case.

12. The vibration-isolating support device according to any one of claims 1 to 11, wherein the air spring is of a bellows type.

13. The vibration-isolating support device according to any one of claims 1 to 12, comprising an outer cylindrical member covering at least a portion of an outer circumferential surface of the air spring.

14. The vibration-isolating support device according to any one of claims 1 to 13, wherein a partition member partitioning the air chamber of the air spring and the liquid chamber of the case containing the damping liquid is mounted to the case.

15. The vibration-isolating support device according to claim 14, wherein the partition member is a diaphragm.

16. The vibration-isolating support device according to claim 15, wherein a center portion of the diaphragm is sandwiched and fixed between the stud and the damping member.

17. The vibration-isolating support device according to claim 15 or 16, wherein the case is formed of a first half body and a second half body assembled axially with each other, and an outer circumferential portion of the diaphragm is sandwiched and fixed between the first half body and a ring member or between the second half body and the ring member.

18. The vibration-isolating support device according to any one of claims 14 to 17, wherein a axial-directional stopper member abutting on the damping member to regulate a relative axial-directional displacement amount of the stud to the case is mounted on a side closer to the liquid chamber than the partition member of the case.

19. The vibration-isolating support device according to any one of claims 1 to 18, comprising a control valve provided between an air pressure source for supplying compressed air to an air chamber of the air spring and the air chamber to control the air pressure in the air chamber.

20. The vibration-isolating support device according to claim 19, wherein the control valve is mounted integrally.

21. The vibration-isolating support device according to claim 19 or 20, comprising position detecting means for detecting the relative axial-directional position of the stud to the case,
wherein the control valve is controlled based on the relative axial-directional position of the stud to the case detected by the position detecting means.

22. The vibration-isolating support device according to any one of claims 1 to 21, wherein the case is fixed to a lower running body of a construction machine, and the stud is fixed to a cab loaded onto the lower running body.

23. The vibration-isolating support device according to any one of claims 1 to 21, wherein the case is fixed to a carriage of a railroad vehicle, and the stud is fixed to a vehicle body of the railroad vehicle.

24. The vibration-isolating support device according to any one of claims 1 to 21, wherein the case is fixed to a wheel supporting portion rotatably supporting wheels of an automobile, and the stud is fixed to a vehicle body of the automobile.
